# EUROPEAN PATENT APPLICATION

(11) **EP 2 570 260 A1**
(43) Date of publication of application: **20.03.2013**
(21) Application number: 11007506.6
(22) Date of filing: 14.09.2011
(51) Int. Cl.: B32B 37/12, B32B 41/00, G01N 21/892

(54) **Apparatus and method for monitoring the quality of an adhesive application**

(71) Applicant: Amcor Flexibles Italia S.R.L., 36030 Lugo Di Vicenza (VI) (IT)
(72) Inventor: Orsini, Lorenzo, Maria, 36016 Thiene (IT)
(74) Representative: Gernet, Samuel Andreas

(57) **Abstract**

A method for monitoring the quality of application of an adhesive material (14) onto a moving first film or foil web (12), in particular for monitoring the quality of the adhesive application during a lamination process, comprises:
moving the first film or foil web (12) in a longitudinal direction (x);
applying an adhesive material (14) as an adhesive material layer (15) over the whole surface or in a pattern onto the moving first film or foil web (12);
sensing radiation originating from the adhesive material (14);
determining a detected value representative of a characteristic of the whole surface or the pattern from the sensed radiation;
comparing the detected value with a reference value representative of a desired standard for the characteristic; and
outputting a signal in accordance with the comparison result.

## Description

The present invention generally relates to an apparatus and a method for monitoring the quality of application of an adhesive material onto a moving film or foil web, in particular for monitoring the quality of the adhesive application during a lamination process.

Known films for the production of flexible packaging for food and pharmaceuticals, also packaging intended for undergoing preservation treatment, i.e. heat treatment as retort or pasteurization, are normally laminates with three or four layers, each layer effecting a specific property of the laminate. Layers of such laminates are normally laminated by using an adhesive and extrusion-lamination process, respectively. A biaxially oriented PET film forming the outer layer is used as a printing support, providing a high-gloss surface and good thermal resistance. Another oriented or unoriented film, e. g. PET or OPA, can be arranged in the middle as a barrier layer support or a layer for improving mechanical properties, such as e.g. impact strength or improved puncture resistance. Frequently, an aluminium foil is used inside the laminate as barrier layer against water vapour, oxygen or aroma loss. A vacuum coated PET or OPA layer can be used as barrier layer in case film transparency would be required. The inner layer generally consists of an unoriented, mono- or coextruded heat sealable film manufactured e.g. in the blow or cast extrusion process. For heat treatment application, PP or PE or a combination of both are frequently used as sealing layers. In the production process via adhesive lamination the individual films are connected to a laminate using solvent-containing or solvent-free two-component adhesives, often in two or more processing steps.

Generally, the dispensing of adhesives onto a moving film or foil web is monitored visually. To facilitate an improved visibility for an operator a stroboscopic lamp is used on the adhesive coating station.

In a lamination process, an adhesive material is generally applied over the whole surface onto a film or foil web. Even if the adhesive material is successfully applied to the film or foil web, it is critical in the manufacture of certain articles to monitor whether or not the applied amount is correct or within an acceptable range. If the amount of adhesive on a film or foil is deficient, the web may not be adequately bonded to a substrate. If the amount of adhesive on a film or foil exceeds a targeted volume, the adhesive application process loses cost effectiveness since more adhesive is being applied than is required to provide an adequate bond.

Although the adhesive material in a laminate for flexible packaging is generally applied over the whole surface onto the moving film or foil web, there might be applications with adhesive material applied in a pattern onto the moving film or foil web.

It is an object of the present invention to provide an apparatus and a method for monitoring the quality of application of an adhesive material onto a moving film or foil web, in particular for monitoring the quality of the adhesive application during a lamination process. The apparatus and method shall permit a fully automated inspection system.

Regarding the apparatus, the foregoing object is achieved according to the invention in that the apparatus comprises:
a coating applicator capable of applying adhesive material over the whole surface or in a pattern onto the moving film or foil web; and
a detection unit capable of sensing radiation originating from the adhesive material, determining a detected value representative of a characteristic of the whole surface or the pattern from the sensed radiation, comparing the detected value with a reference value representative of a desired standard for the whole surface or the characteristic, and outputting a signal in accordance with the comparison result.

In one specific embodiment of the apparatus of the invention, the detection unit is a machine vision system including a camera and a controller. The camera is capable of capturing an image of the adhesive material layer. The controller is capable of determining a detected value representative of a characteristic of the pattern from the image, comparing the detected value with a reference value representative of a desired standard for the characteristic, and outputting a signal in accordance with the comparison result.

In further specific embodiment of the apparatus of the invention, the detection unit comprises an emitter capable of irradiating the adhesive material with radiation of a first wavelength to induce radiation in the form of fluorescence at a second wavelength different than the first wavelength, wherein the first wavelength is preferably within the ultraviolet region of the electromagnetic spectrum, and the second wavelength is within the visible region of the electromagnetic spectrum, and a detector capable of sensing radiation of the second wavelength.

The apparatus preferably comprises an alarm unit coupled electrically with said detection unit for receiving the signal, said alarm unit capable of providing at least one of a visual and/or an audible alarm to an observer upon receiving the signal.

The detection unit may have a field of view including a reference area in space which encompasses at least a portion of the moving film or foil web after the whole surface or the pattern of the adhesive material is applied onto the moving film or foil web by said coating applicator.

Regarding the method, the foregoing object is achieved according to the invention in that the method comprises:
moving the film or foil web in a longitudinal direction;
applying an adhesive material over the whole surface or in a pattern onto the moving film or foil web;
sensing radiation originating from the adhesive material;
determining a detected value representative of a characteristic of the whole surface or the pattern from the sensed radiation;
comparing the detected value with a reference value representative of a desired standard for the characteristic; and
outputting a signal in accordance with the comparison result.

The method preferably comprises providing an alarm to an observer upon receiving the signal, wherein the providing of the alarm preferably includes providing at least one of a visible indication and an audible indication to an observer.

The sensing of radiation may comprise capturing an image of the first film or foil web coated with the adhesive material layer, and the determining of the detected value further comprises processing the captured image.

The processing of the captured image preferably includes determining the volume of adhesive material.

The method preferably comprises radiating the adhesive material with radiation of a first wavelength, and the sensing of radiation preferably comprises detecting fluorescence of a second wavelength different from the first wavelength emitted from the radiated adhesive material, wherein the first wavelength is preferably within the ultraviolet region of the electromagnetic spectrum, and the second wavelength is within the visible region of the electromagnetic spectrum.

The comparing of the detected and reference values preferably comprises sensing changes in the detected value of the characteristic relative to the reference value. The characteristic may be used to determine whether a proper volume of adhesive is being applied.

The sensing of radiation may occur before or after a lamination process. It can e.g. be applied at the end of a lamination process to check all kind of possible defects coming from the lamination process.

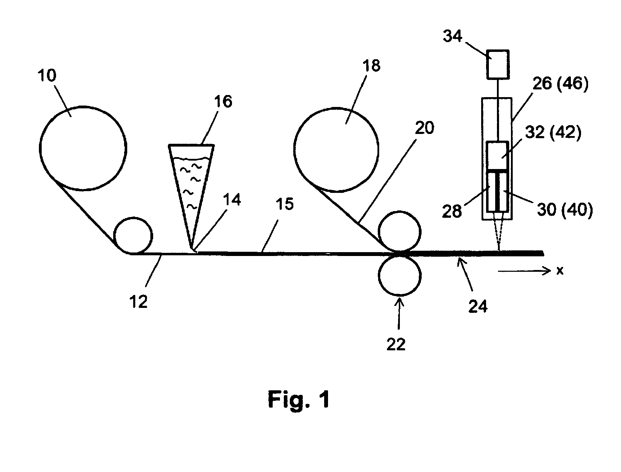

These and other features, objects and advantages of the invention will become more readily apparent to those of ordinary skill in the art upon review of the following detailed description, taken in conjunction with the accompanying drawing which shows in Fig. 1 a schematic view of a production line for the manufacturing of a laminate.

Referring to Fig. 1, in a production line for the manufacturing of a laminate a first film or foil web 12 is unwound from a first coil 10 and is on one side coated with an adhesive material 14 dispensed from a coating applicator 16 which is capable of applying adhesive material 14 as an adhesive material layer 15 over the whole surface, i. e., the entire width, onto the first film or foil web 12 moving in a longitudinal direction x. A second film or foil web 20, which in the present case is transparent for ultraviolet and visible radiation, is unwound from a second coil 18 and meets the first film or foil web 12 coated with adhesive material layer 15 at a nip roller station 22 thereby forming a laminate 24. A detection unit 26 is positioned at a location downstream of the nip roller station 22. The detection unit 26 includes a source or emitter 28 of ultraviolet radiation and a detector 30 capable of sensing visible radiation.

The emitter 28 projects ultraviolet radiation toward the moving laminate. The adhesive material 14 contains one or more fluorescing agents or substances, such as dyes or inks that emit radiation or fluoresce in the visible region of the electromagnetic spectrum when irradiated by radiation from emitter 28 in the ultraviolet region of the electromagnetic spectrum. The intensity of the fluorescence detected by the detector 30 represents the coverage of adhesive material 14 on the first film or foil web 12 or the thickness of the adhesive material layer 15.

The detection unit 26 further includes a controller 32 defining one or more intensity limits or thresholds relating the intensity of the detected fluorescence and triggering an output error signal if the intensity of the fluorescence falls outside of any of the thresholds. For example, the intensity threshold may be a lower intensity level which, if not exceeded, indicates an under-application of the amount of adhesive material 14. Alternatively, the intensity threshold may be an upper intensity level which, if exceeded, indicates an over-application of the amount of adhesive material 14. The intensity thresholds represent reference values of a desired standard for the intensity of the detected fluorescence. The controller 32 may provide the error signal to an alarm unit 34 for a responsive action. The alarm unit 34 is interfaced with the detection unit 26. The alarm unit 34, in the event of improper or failed application of adhesive material 14 onto the first film or foil web 12, may include a visual indicator or an audible indicator, and/or may be provide a signal to stop the production line. The detection unit 26 triggers operation of the alarm unit 34.

The controller 32 compares the detected value of the characteristic with a stored reference value representative of a desired standard for the characteristic. For example, the reference value may be established by analyzing a set of captured images to determine the reference value or may be empirically determined by observation. The comparison may determine the volume of adhesive material. If the comparison indicates that the detected value representative of, for example, the average intensity level is below a threshold, exceeds a limit, or is outside of a range of values, the controller 32 of detection unit 26 transmits an alarm signal to the alarm unit 34.

If the amount of adhesive material 14 on the first film or foil web 12 is outside of tolerance limits, the controller 32 provides an error to the alarm unit 34, which indicates an error condition. The alarm unit 34 can provide an audible or visible alert to an observer, and/or may issue a deactivation signal for stopping the production line.

In a specific embodiment, the detection unit 26 is a machine vision system 46 that incorporates a camera 40, such as a CCD camera, and a controller 42. The controller 42 processes a captured image to determine e. g. a detected value of a characteristic of the laminate 24 such as e. g. an absence of adhesive material on the coated surface of the first film or foil web 12. For example, the controller 42 may calculate an average intensity level of the captured image, or a portion of the captured image, as a characteristic of a pattern.

## Claims

1. An apparatus for monitoring the quality of application of an adhesive material (14) onto a moving first film or foil web (12), in particular for monitoring the quality of the adhesive application during a lamination process, comprising:
a coating applicator (16) capable of applying adhesive material (14) as an adhesive material layer (15) over the whole surface or in a pattern onto the moving first film or foil web (12); and
a detection unit (26) capable of sensing radiation originating from the adhesive material (14), determining a detected value representative of a characteristic of the whole surface or the pattern from the sensed radiation, comparing the detected value with a reference value representative of a desired standard for the whole surface or the characteristic, and outputting a signal in accordance with the comparison result.

2. The apparatus of claim 1, wherein a second film or foil web (20) is bonded to the first film or foil web (12) coated with the adhesive material layer (15) thereby forming a laminate (24).

3. The apparatus of claim 1, wherein said detection (26) unit comprises a machine vision system (46) capable of sensing radiation to capture an image of the adhesive material layer (15), said machine vision system (46) being further capable of processing the captured image to determine the detected value of the characteristic.

4. The apparatus of claim 3, wherein said machine vision system (46) includes:
a camera (40) capable of capturing the image; and
a controller (42) capable of processing the image to determine the detected value of the characteristic, said controller interfaced with said camera (40) for transferring the captured image from said camera (40) to said controller (42).

5. The apparatus of claim 1, wherein said detection (26) unit comprises:
an emitter (28) capable of irradiating the adhesive material with radiation of a first wavelength to induce radiation in the form of fluorescence at a second wavelength different than the first wavelength, wherein the first wavelength is preferably within the ultraviolet region of the electromagnetic spectrum, and the second wavelength is within the visible region of the electromagnetic spectrum; and
a detector (30) capable of sensing radiation of the second wavelength.

6. The apparatus of claim 1, further comprising an alarm unit (34) coupled electrically with said detection unit (26) for receiving the signal, said alarm unit (34) capable of providing at least one of a visual and/or an audible alarm to an observer upon receiving the signal.

7. A method for monitoring the quality of application of an adhesive material (14) onto a moving first film or foil web (12), in particular for monitoring the quality of the adhesive application during a lamination process, comprising:
moving the first film or foil web (12) in a longitudinal direction (x);
applying an adhesive material (14) as an adhesive material layer (15) over the whole surface or in a pattern onto the moving first film or foil web (12);
sensing radiation originating from the adhesive material (14);
determining a detected value representative of a characteristic of the whole surface or the pattern from the sensed radiation;
comparing the detected value with a reference value representative of a desired standard for the characteristic; and
outputting a signal in accordance with the comparison result.

8. The method of claim 7, further comprising providing an alarm to an observer upon receiving the signal.

9. The method of claim 8, wherein the providing of the alarm includes providing at least one of a visible indication and an audible indication to an observer.

10. The method of claim 7, wherein the sensing of radiation further comprises capturing an image of the adhesive material layer (15), and the determining of the detected value further comprises processing the captured image.

11. The method of claim 7, wherein the processing of the captured image includes determining the volume of adhesive material or the thickness of the adhesive material layer (15).

12. The method of claim 7, further comprising radiating the adhesive material with radiation of a first wavelength, and wherein the sensing of radiation further comprises detecting fluorescence of a second wavelength different from the first wavelength emitted from the radiated viscous material, wherein the first wavelength is preferably within the ultraviolet region of the electromagnetic spectrum, and the second wavelength is within the visible region of the electromagnetic spectrum.

13. The method of claim 7, wherein the comparing of the detected and reference values further comprises sensing changes in the detected value of the characteristic relative to the reference value.

14. The method of claim 7, wherein the sensing of radiation occurs before or after a lamination process.
